Europäisches Patentamt

European Patent Office

Office européen des brevets

(11) Veröffentlichungsnummer: **0 182 141**
**A2**

## (12) EUROPÄISCHE PATENTANMELDUNG

(21) Anmeldenummer: **85113513.7**

(51) Int. Cl.⁴: **G 01 L 5/00**

(22) Anmeldetag: **24.10.85**

(30) Priorität: **16.11.84 DE 3441938**

(43) Veröffentlichungstag der Anmeldung: **28.05.86**
**Patentblatt 86/22**

(84) Benannte Vertragsstaaten: **AT BE CH FR GB IT LI LU NL SE**

(71) Anmelder: **Preh Industrieausrüstungen GmbH, Schweinfurter Strasse 5 Postfach 1740, D-8740 Bad Neustadt/Saale (DE)**

(72) Erfinder: **Bardroff, Hans, Schuhmarktstrasse 12, D-8740 Bad Neustadt/Saale (DE)**
Erfinder: **Rätsch, Manfred, Von Bibrastrasse 27, D-8733 Bad Bocklet-Steinach (DE)**

(54) **Einrichtung zum Vergleich von zu messenden Wertpaaren mit einer Sollkennlinie.**

(57) Eine Einrichtung zum Vergleich von einem Prüfling zu messenden Wertpaaren mit Sollwerten aus einer Sollkennlinie muß schnell arbeiten, um zur Qualitätskontrolle eingesetzt werden zu können. Es sind hierfür in einem Speicher (10) die digitalen Sollwerte der ersten Einflußgröße K abgelegt und die zugeordneten Werte der zweiten Einflußgrösse W sind als digitale Adressen programmiert. Jeder der beiden Einflußgrößen wird analog gemessen. Ein Analog/Digital-Wandler (8) setzt das analoge Signal der zweiten Einflußgröße W in ein digitales Adresssignal für den Speicher (10) um. Dieses ruft aus dem Speicher (10) den zugeordneten Sollwert der ersten Einflußgröße K ab. Ein Vergleicher vergleicht diesen Sollwert mit dem gemessenen Wert der ersten Einflußgröße K.

0 182 141

Preh
Industrieausrüstungen GmbH
Schweinfurter Straße 5
8740 Bad Neustadt/Saale

J P-26/84

### Einrichtung zum Vergleich von zu messenden Wertpaaren mit einer Sollkennlinie

Die Erfindung betrifft eine Einrichtung zum Vergleich von an einem Prüfling zu messenden Wertpaaren aus zwei Einflußgrößen, beispielsweise aus einer Kraft/Weg-Kennlinie, mit Sollwerten aus einer Sollkennlinie mit Toleranzrahmen.

Beispielsweise bei manuell zu betätigenden Tastschaltern ist häufig eine Kraft/Weg-Kennlinie vorgegeben, nach der bei einem bestimmten Betätigungsweg die Betätigungskraft einen bestimmten Wert annehmen soll. Dies wird bei der Entwicklung solcher Tastschalter berücksichtigt. Es ist in der Praxis bisher sehr aufwendig und zeitraubend, nach der Fertigung zu überprüfen, ob an den gefertigten Tastschaltern die Kennlinie in dem Toleranzrahmen eingehalten ist. In der Regel werden deshalb nur grobe Stichproben durchgeführt.

Auch eine Automatisierung des Vergleichsvorgangs mit

- 2 -

dem Einsatz von Mikroprozessoren ist problematisch, da auch dabei der Vergleichsvorgang eine lange Zeit beanspruchen würde. Es müßten die Tastschalter sehr langsam betätigt werden, d. h. der Hub des Tastschalters müßte in einer langen Zeit durchfahren werden. Diese Zeit wäre jedenfalls länger als sie bei der manuellen Betriebsbetätigung des Tastschalters die Regel ist. Der Vergleich würde also nicht unter betriebsüblichen Bedingungen durchgeführt, was den Wert des Vergleichsergebnisses in Frage stellen würde.

Aufgabe der Erfindung ist es, eine Einrichtung der eingangs genannten Art zu schaffen, bei der der Vergleichsvorgang schnell abläuft, so daß die Einrichtung zur Qualitätskontrolle eingesetzt werden kann.

Erfindungsgemäß ist obige Aufgabe bei einer Einrichtung der eingangs genannten Art dadurch gelöst, daß in einem adressierbaren, programmierbaren Speicher die digitalen Sollwerte der ersten Einflußgröße an Speicherstellen abgelegt sind und die zugeordneten Werte der zweiten Einflußgröße als digitale Adressen der entsprechenden Speicherstellen programmiert sind, daß zur Messung jeder der beiden Einflußgrößen ein Meßglied vorgesehen ist, das ein dem jeweiligen Meßwert entsprechendes analoges Signal erzeugt, daß ein Analog/Digital-Wandler das analoge Signal der zweiten Einflußgröße in ein digitales Adressignal für den Speicher umsetzt, das aus dem Speicher den zugeordneten Sollwert der ersten Einflußgröße abruft, und daß ein Vergleicher diesen Sollwert mit dem gemessenen Wert der ersten Einflußgröße vergleicht und das Vergleichsergebnis anzeigt.

Durch diesen Aufbau ist ein schneller Ablauf des Vergleichsvorgangs möglich. Es müssen nicht Rechenoperationen durchlaufen werden. Der Wert der zweiten gemessenen Einflußgröße bildet selbst das jeweilige Adressignal für den Speicher.

Durch die Erfindung ist es möglich, die Taste bei der Durchführung des Vergleichsvorgangs maschinell ebenso schnell zu bewegen, wie dies bei einer manuellen Bedienung der Taste üblich ist. Der Ablauf des Vergleichvorgangs wird durch diese schnelle Tastenbewegung nicht beeinträchtigt.

Mit einer Einrichtung der genannten Art lassen sich nicht nur Kraft/Weg-Kennlinien vergleichen. Die Einrichtung kann in gleicher Weise auch zum Vergleich von anderen Kennlinien, beispielsweise Strom/Spannungs-Kennlinien mit gemessenen Werten, eingesetzt werden.

In Ausgestaltung der Erfindung ist in dem adressierbaren, programmierbaren Speicher ein Sollwert einer weiteren Einflußgröße abgelegt und der diesem Sollwert zugeordnete Sollwert der zweiten Einflußgröße

- 4 -

ist dessen Adresse. Ein weiteres Meßglied erfaßt den jeweiligen Meßwert der weiteren Einflußgröße und ein weiterer Vergleicher vergleicht den Sollwert mit dem Meßwert der weiteren Einflußgröße. Es ist damit beispielsweise möglich, zu überprüfen, ob der elektrische Schaltkontakt eines Tastschalters nach dem vorgeschriebenen Teilhub geschlossen hat oder nicht.

Weitere Ausgestaltungen der Erfindung ergeben sich aus der folgenden Beschreibung eines Ausführungsbeispiels. In der Zeichnung zeigen:

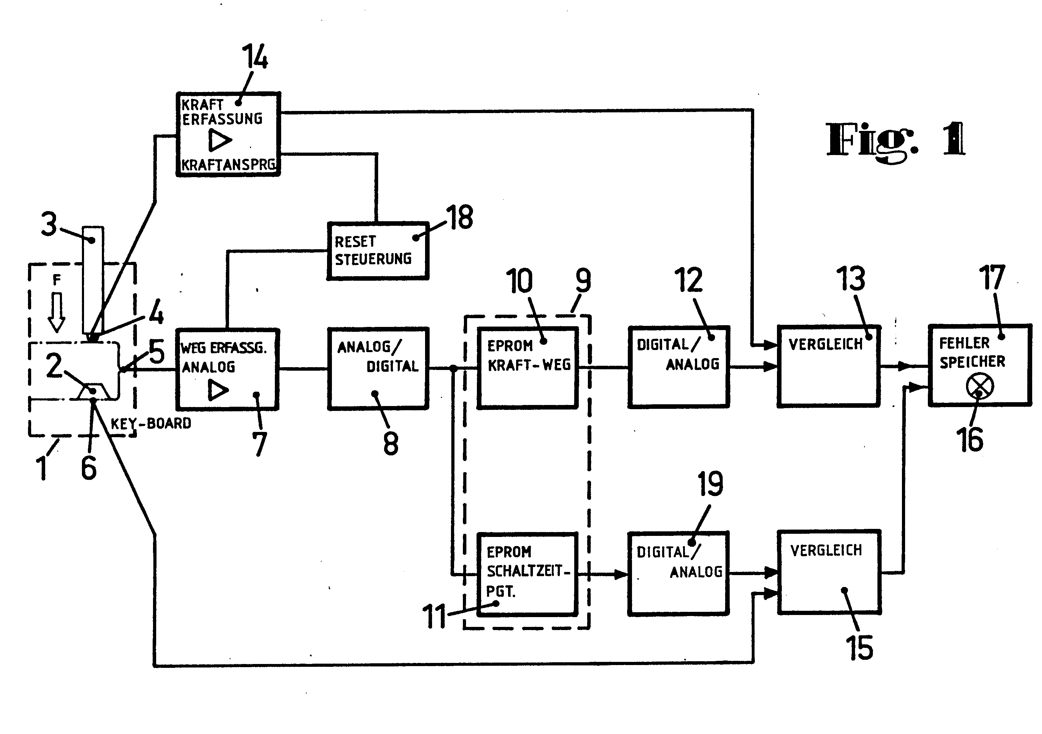

Figur 1   ein Blockschaltbild der Einrichtung und

Figur 2   einen Kennlinienverlauf.

Die Einrichtung weist eine Prüflingaufnahme 1 für einen Prüfling 2 - hier einen Tastschalter - auf. Die Aufnahme 1 ist mit einem Betätigungsglied 3 zur Betätigung des Prüflings 2 versehen.

In der Aufnahme 1 ist am Betätigungsglied 3 ein Kraft-Meßfühler 4 angeordnet. Außerdem ist ein Weg-Meßglied 5 vorgesehen. Der Kraft-Meßfühler 4 misst die Kraft, die das Betätigungsglied 3 bei der Betätigung des Tastschalters 2 aufbringt. Das Weg-Meßglied 5 misst die dabei erfolgende Verschiebung des Tastschalters 2. Ein weiteres Meßglied 6 ist

- 5 -

- 5 -

vorgesehen, um den Schließpunkt elektrischer Kontakte der Taste zu erfassen.

Die Meßglieder 4,5 und 6 geben analoge Signale ab.

Dem Meßglied 5 ist ein Verstärker 7 nachgeschaltet. An dessen Ausgang liegt ein Analog/Digital-Wandler 8. Dem Analog/Digital-Wandler 8 ist ein adressierbarer, programmierbarer Speicher 9 nachgeschaltet, der aus zwei EPROM-Speicherbausteinen 10, 11 besteht. Beispielsweise weist jeder Speicherbaustein 10, 11 255 Adressen bzw. Speicherstellen auf. Adressierbar sind beide Speicherbausteine 10, 11 vom Analog/Digital-Wandler 8.

Dem Speicherbaustein 10 ist ein Digital/Analog-Wandler 12 nachgeschaltet, der an einen Vergleicher 13 angeschlossen ist. Am Vergleicher 13 liegt außerdem ein Verstärker 14, der dem Kraft-Meßfühler 4 nachgeschaltet ist.

Dem Speicherbaustein 11 ist über einen Digital/Analog-Wandler 19 ein Vergleicher 15 nachgeschaltet, an dem auch das weitere Meßglied 6 liegt. Beide Vergleicher 13, 15 wirken auf einen mit einer Anzeige 16 versehenen Fehlerspeicher 17.

Zwischen den Verstärker 7 und den Verstärker 14 ist eine Rücksetzsteuerung 18 geschaltet.

Die Funktionsweise der beschriebenen Einrichtung ist im wesentlichen folgende:

- 6 -

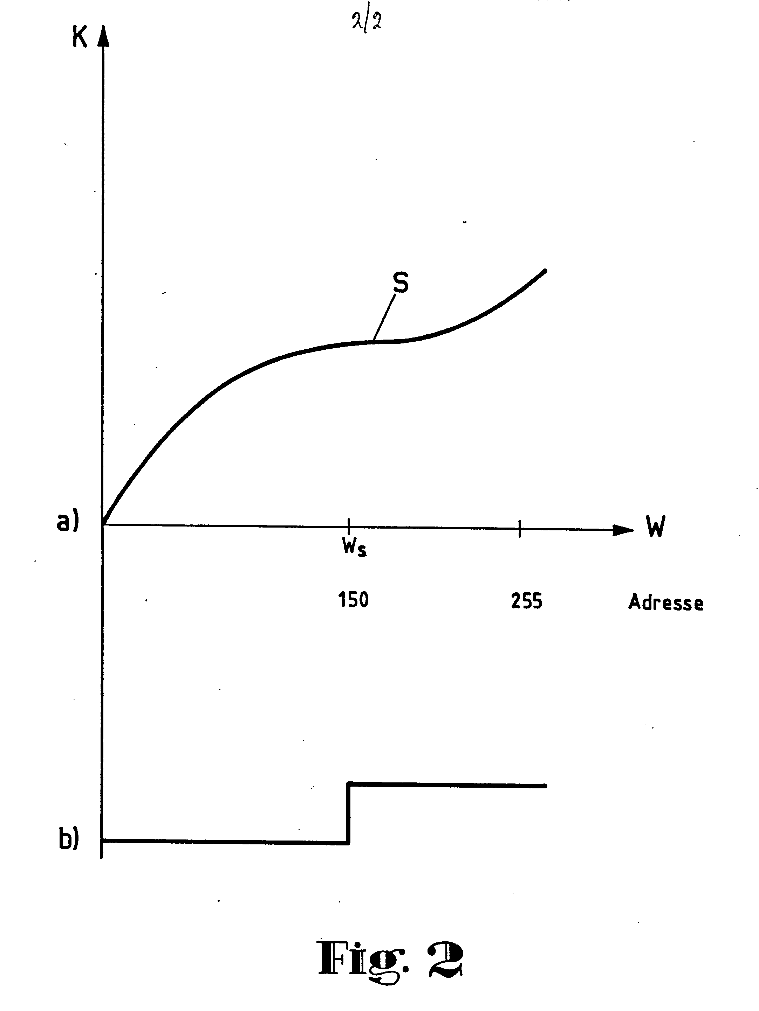

Die Speicherstellen "1" bis "255" werden mit den digitalen Sollwerten der Kraft programmiert, die sich beispielsweise aus der Sollkennlinie S (vgl. Figur 2a) des Prüflings 2 ergeben. Die Adressen "1" bis "255" entsprechen in der Sollkennlinie dem Weg. Sollen die elektrischen Kontakte des Prüflings 2 beispielsweise nach einem Betätigungsweg Ws des Tasters 2 geschaltet haben, der beispielsweise der Adresse "150" entspricht (vgl. Figur 2b), dann werden die Speicherstellen mit den Adressen "1" bis "149" mit offenen Kontakten entsprechenden Werten und die Speicherstellen mit den Adressen "150" bis "255" mit geschlossenen Kontakten entsprechenden Werten programmiert (vgl. Figur 2b).

Nach der Programmierung ist die Einrichtung zur Prüfung von Prüflingen betriebsbereit. Das Betätigungsglied 3 drückt wie bei einer manuellen Betätigung auf den Taster 2. Dabei stellt sich am Ausgang des Verstärkers 7 eine dem Verschiebeweg des Tasters 2 proportionale Analogspannung ein. Am Ausgang des Verstärkers 14 stellt sich eine der Betätigungskraft proportionale Analogspannung ein. Der Analog/Digital-Wandler 8 setzt die dem Weg entsprechende Analogspannung in einen Digitalwert um, der jeweils einer der Adressen der Speicherbausteine 10 und 11 entspricht. Entsprechend der jeweiligen Adresse wird der zugehörige Sollwert der Betätigungskraft an den Digital/Analog-Wandler 12 gegeben. An dessen Ausgang steht dann der dem Sollwert entsprechende Analogwert an. Dieser wird im Vergleicher 13 mit dem tatsächlich gemessenen Wert verglichen. Stimmen diese Werte im Toleranzrahmen überein, dann erfolgt an der Anzeige 16 des Fehlerspeichers 17 keine Anzeige. Weichen die Werte voneinander ab, erfolgt eine Anzeige. Es ist erkennbar, bei welcher Adresse, also welchem Weg, die tatsächliche Betätigungskraft den Wert der Sollwertkurve übersteigt oder unterschreitet.

Gleichzeitig mit den Speicherbausteinen 10 adressiert der Analog/Digital-Wandler 8 auch den Speicherbaustein 11, so daß dieser den Sollwert des betreffenden Schaltzustandes an den Vergleicher 15 gibt. Stimmt dieser mit dem tatsächlichen Schaltzustand überein, dann erfolgt keine Anzeige. Weicht er ab, dann erfolgt eine Anzeige.

Im Rahmen der Erfindung liegen zahlreiche weitere Ausführungsbeispiele. So ist es beispielsweise möglich, anstelle des Digital/Analog-Wandlers 12 zwischen dem Vergleicher 13 und dem Verstärker 14 einen Analog/Digital-Wandler vorzusehen. Der Vergleicher 13 führt dann den Vergleich aufgrund digitaler Werte durch.

## Bezugszeichenliste

1 Prüflingaufnahme

2 Prüfling

3 Betätigungsglied

4 Kraft-Meßfühler

5 Weg-Meßglied

6 Meßglied

7 Verstärker

8 Analog/Digital-Wandler

9 Speicher

10 Speicherbaustein

11 Speicherbaustein

12 Digital/Analog-Wandler

13 Vergleicher

14 Verstärker

15 Vergleicher

16 Anzeige

17 Fehlerspeicher

18 Rücksetzsteuerung

S Sollkennlinie

K erste Einflußgröße

W zweite Einflußgröße

19 Digital/Analog-Wandler

**P r e h**
**Industrieausrüstungen GmbH**
**Schweinfurter Straße 5**
**8740 Bad Neustadt/Saale**


J P-26/84


A n s p r ü c h e

Einrichtung zum Vergleich von zu messenden
Wertpaaren mit einer Sollkennlinie

1.    Einrichtung zum Vergleich von an einem Prüfling zu messenden Wertpaaren aus zwei Einflußgrößen, beispielsweise aus einer Kraft-Weg-Kennlinie, mit Sollwerten aus einer Sollkennlinie mit Toleranzrahmen, dadurch gekennzeichnet,

daß in einem adressierbaren, programmierbaren Speicher (9, 10) die digitalen Sollwerte der ersten Einflußgröße (K) an Speicherstellen abgelegt sind und die zugeordneten Werte der zweiten Einflußgröße (W) als digitale Adressen der betreffenden Speicherstellen programmiert sind,

daß zur Messung jeder der beiden Einflußgrößen (K, W) ein Meßglied (4, 5) vorgesehen ist, das ein dem jeweiligen Meßwert entsprechendes analoges Signal erzeugt, daß ein Analog/Digital-Wandler (8) das analoge Signal der zweiten Einflußgröße (W) in ein

- 2 -

- 2 -

digitales Adressignal für den Speicher (9, 10) umsetzt, das aus dem Speicher (9, 10) den zugeordneten Sollwert der ersten Einflußgröße (K) abruft, und daß ein Vergleicher diesen Sollwert mit dem gemessenen Wert der ersten Einflußgröße (K) vergleicht und das Vergleichsergebnis anzeigt.

2. Einrichtung nach Anspruch 1,
dadurch gekennzeichnet,
daß in dem adressierbaren, programmierbaren Speicher (9, 10) ein Sollwert einer weiteren Einflußgröße abgelegt ist und der diesem Sollwert zugeordnete Sollwert der zweiten Einflußgröße (W) dessen Adresse ist, und daß ein weiteres Meßglied (6) den jeweiligen Meßwert der weiteren Einflußgröße erfaßt und daß ein weiterer Vergleicher den Sollwert mit dem Meßwert der weiteren Einflußgröße vergleicht.

3. Einrichtung nach Anspruch 1 oder 2,
dadurch gekennzeichnet,
daß dem Speicher (10) ein Digital/Analog-Wandler (12) nachgeschaltet ist.

Fig. 1

KRAFT ERFASSUNG / KRAFTANSPRG (14)

RESET STEUERUNG (18)

WEG ERFASSG. ANALOG (7)

ANALOG/ DIGITAL (8)

EPROM KRAFT-WEG (10) (9)

DIGITAL/ ANALOG (12)

VERGLEICH (13)

FEHLER SPEICHER (17) (16)

EPROM SCHALTZEIT-PGT. (11)

DIGITAL/ ANALOG (19)

VERGLEICH (15)

KEY-BOARD

Preh 26/84

0182141

1/2

0182141

2/2

K

S

a)

W

$W_s$

150    255    Adresse

b)

**Fig. 2**

Preh 26/84